Europäisches Patentamt

European Patent Office

Office européen des brevets

(19)

(11) Veröffentlichungsnummer: **0 262 417**
**A2**

(12) **EUROPÄISCHE PATENTANMELDUNG**

(21) Anmeldenummer: **87112617.3**

(22) Anmeldetag: **29.08.87**

(51) Int. Cl.⁴ **B60S 3/04**

(30) Priorität: **02.10.86 DE 3633567**

(43) Veröffentlichungstag der Anmeldung:
**06.04.88 Patentblatt 88/14**

(84) Benannte Vertragsstaaten:
**AT CH DE GB LI SE**

(71) Anmelder: **Mr. Wash Auto-Service AG**
**Cecilienallee 82 Postfach 30 10 55**
**D-4000 Düsseldorf 30(DE)**

(72) Erfinder: **Messing, Horst**
**Luttersiefen 3**
**D-5253 Lindlar(DE)**
Erfinder: **Enning, Joseph, Dr.**
**"Arcadia" 990 Old Garth Road**
**Charlottesville VA 22901(US)**

(74) Vertreter: **Patentanwälte Dipl.-Ing. Alex**
**Stenger Dipl.-Ing. Wolfram Watzke Dipl.-Ing.**
**Heinz J. Ring**
**Kaiser-Friedrich-Ring 70**
**D-4000 Düsseldorf 11(DE)**

(54) **Vorrichtung zum Reinigen des Rückspiegels eines Fahrzeugs in einer Waschstrasse.**

(57) Gegenstand der Erfindung ist eine Vorrichtung zum Reinigen des Rückspiegels eines Fahrzeugs in einer Waschstraße mit einem sich in senkrechter Richtung erstreckenden seitlichen Reinigungselement (Sprühdüsenrohr 8), entlang dem die Seitenteile des Fahrzeugs zusammen mit dem Rückspiegel vorbeigeführt werden. Um die Reinigung des Rückspiegels zu verbessern, wird ein am Reinigungselement 8 angeordnetes und in Förderrichtung des Fahrzeugs gerichtetes Spiegelreinigungselement (Sprühdüsenelement 20) vorgeschlagen, das über einen Hebelarm 22 nachführbar sein kann.

Fig.2

Die Erfindung betrifft eine Vorrichtung zum Reinigen des Rückspiegels eines Fahrzeugs in einer Waschstraße mit einem sich in senkrechter Richtung erstreckenden seitlichen Reinigungselement (Sprühdüsenrohr oder Trockendüsenrohr), entlang dem die Seitenteile des Fahrzeugs zusammen mit dem Rückspiegel vorbeigeführt werden.

Grundsätzlich unterscheidet man zwei Systeme von automatischen Autowaschanlagen. Zum einen gibt es die sogenannten Portalwaschanlagen, bei denen das zu waschende Fahrzeug steht und die an einem Portal angeordneten Reinigungselemente (Waschbürsten, Trockendüsen) am Fahrzeug entlanggeführt werden. Zum anderen gibt es die sogenannten Waschstraßen, bei denen das Fahrzeug mittels eines Förderbandes durch die Waschanlage hindurchgezogen wird. Dabei sind die Wascheinrichtungen stationär entlang der Rollrichtung des Fahrzeuges angeordnet.

Bei den zuletztgenannten Waschstraßen (und auch bei den Portalwaschanlagen) bereitet die Reinigung des Rückspiegels eines Fahrzeugs Schwierigkeiten. Zum Waschen der Seitenteile des vorbeigeführten Fahrzeugs und damit auch des Rückspiegels dienen senkrecht angeordnete Reinigungselemente, die auf beiden Seiten der Waschstraße stationär angeordnet sind. Derartige Reinigungselemente können Sprühdüsenrohre oder Trockendüsenrohre sein. Mit den Sprühdüsenrohren erfolgt der eigentliche Waschvorgang, indem unter hohem Druck Wasser durch Düsen hindurch auf die Seitenteile des Fahrzeugs gesprüht wird. Nach dem Waschvorgang erfolgt der Trockenvorgang mit dem Trockendüsenrohr, indem Luft auf die Seitenteile des Fahrzeugs gelenkt wird.

Diese Reinigungselemente haben ihre Strahlrichtung im wesentlichen quer zur Förderrichtung des Fahrzeugs, so daß die Beaufschlagung der Seitenteile des Fahrzeugs im wesentlichen in senkrechter oder leicht angewinkelter Richtung erfolgt. Dies ist für die Seitenkarosserieteile des Fahrzeugs optimal, nicht jedoch für den Rückspiegel, dessen Spiegelfläche einen spitzen Winkel mit der Seitentür des Fahrzeugs einschließt, so daß diese Spiegelfläche bei senkrechter Beaufschlagung der Seitenkarosserieteile durch die Reinigungselemente im "Schatten" liegt. Eine direkte Reinigung der Spiegelfläche ist somit nicht möglich. Eine Reinigung erfolgt allenfalls durch reflektiertes Spritzwasser. Darüber hinaus sind die "toten Winkel" des Rückspiegels nicht zugänglich, so daß auch hier keine gute Reinigung möglich ist.

Davon ausgehend liegt der Erfindung die **Aufgabe** zugrunde, die Reinigung des Rückspiegels bei Fahrzeugen in einer Waschstraße zu verbessern.

Als technische **Lösung** wird ein am Reinigungselement angeordnetes und in Förderrichtung des Fahrzeugs gerichtetes Spiegelreinigungselement (Sprühdüsenelement oder Trockendüsenelement) vorgeschlagen.

Dieses Spiegelreinigungselement hat den Vorteil, daß insbesondere die Spiegelfläche des Rückspiegels eine optimale Reinigung erfährt. Durch die Ausrichtung des Spiegelreinigungselements in Förderrichtung des Fahrzeugs entsteht eine Strahlrichtungskomponente ebenfalls in Förderrichtung des Fahrzeugs, so daß die Spiegelfläche des Rückspiegels durch das entsprechende Reinigungsmittel direkt beaufschlagt wird. Für den eigentlichen Reinigungsvorgang kann dabei das Spiegelreinigungselement ein Sprühdüsenelement sein entsprechend dem Sprühdüsenrohr der seitlichen Reinigungselemente zum Waschen der Seitenteile des Fahrzeugs. Mit diesem Sprühdüsenelement kann unter hohem Druck Wasser auf die Spiegelfläche des Rückspiegels geleitet werden, so daß damit eine sehr gute Reinigung erfolgt. Unter dem Spiegelreinigungselement ist auch ein Trockendüsenelement zu verstehen, das nach dem eigentlichen Waschvorgang mit dem Sprüh düsenelement die Trocknung vornimmt. Da mit diesem Trockendüsenelement Luft ebenfalls auf die Spiegelfläche des Rückspiegels geleitet wird, ist eine einwandfreie Trocknung gewährleistet, ohne daß die Gefahr besteht, daß Wasserrückstände sich in den diversen Vertiefungen des Rückspiegels sammeln und nach dem Trockenvorgang herunterperlen. Sollten weitere Vorrichtungen der Waschstraße vorhanden sein, die u.a. auch der Reinigung des Rückspiegels dienen, können diese als entsprechende Reinigungselemente im Sinne der Erfindung ausgebildet sein. Darüber hinaus werden durch die Spiegelreinigungselemente auch die "toten Winkel" erreicht, so daß diese optimal gereinigt werden.

Vorzugsweise ist das Spiegelreinigungselement in Förderrichtung des Fahrzeugs schräg auf dessen Seitenteile in den Winkelbereich zwischen diesen Seitenteilen und dem Rückspiegel gerichtet. Durch diese Anordnung des Spiegelreinigungselements kann das Reinigungselement in relativ großem Abstand an den Seitenteilen des Fahrzeugs vorbeigeführt werden, ohne daß das Spiegelreinigungselement seine Wirkung einbüßt, da durch die schräge Ausrichtung der Seitenspiegel im Wirkungsbereich des Spiegelreinigungselements liegt.

In einer ersten Ausführungsform kann das Spiegelreinigungselement fest am Reinigungselement angeordnet sein. Auf diesen Weise ist das Spiegelreinigungselement ohne großen zusätzlichen technischen Aufwand anbringbar. Allerdings ist der Rückspiegel nur relativ kurz im Wirkungsbereich des Spiegelreinigungselements, da der Rückspiegel mit konstanter Geschwindigkeit an diesem vorbeizieht.

In einer zweiten Ausführungsform ist das Spiegelreinigungselement bezüglich zum Rückspiegel in Förderrichtung des Fahrzeugs nachführbar. Diese Ausführungsform verlangt zwar einen größeren technischen Aufwand, doch erhöht sich die Wirkung des Spiegelreinigungselements, da dieses nachgeführt wird. Diese Ausführungsform ist insbesondere für das Sprühdüsenelement für den eigentlichen Waschvorgang geeignet, um so eine sehr wirkungsvolle Reinigung des Rückspiegels zu gewährleisten.

Bei der zweiten Ausführungsform wird in einer Weiterbildung vorgeschlagen, daß das Spiegelreinigungselement am freien Ende eines Hebelarmes angeordnet ist, der mit seinem anderen Ende entweder am oberen oder am unteren Ende des Reinigungselements um eine quer zur Förderrichtung des Fahrzeugs verlaufende Achse verschwenkbar ist, wobei zwischen dem Hebelarm und dem Reinigungselement eine Zylinder/Kolben-Einheit angeordnet ist. Durch den Hebelarm wird auf sehr einfache Weise eine Nachführeinrichtung geschaffen. Durch den Kreisbogen, den das Spiegelreinigungselement beschreibt, wird die Höhendifferenz zu den verschiedenen Fahrzeugen und somit die verschiedenen Rückspiegelhöhen ausgeglichen.

In einer vorteilhaften Weiterbildung dieser Art der Nachführung wird gemäß einem weiteren Merkmal der Erfindung vorgeschlagen, daß der Hebelarm zum Nachführen des Spiegelreinigungselements aus zwei um feste Punkte frei drehbar gelagerten Tragarmen besteht, daß zwischen den freien Enden der Tragarme ebenfalls frei drehbar ein Tragteil angeordnet ist und daß an dem Tragteil das Spiegelreinigungselement angebracht ist. Durch die frei beweglichen Tragarme und das Tragteil wird ein Parallelogramm gebildet, das den Vorteil hat, daß das am Tragteil angeordnete Spiegelreinigungselement seine Wirkrichtung beibehält, ohne daß diese sich entsprechend dem kreisbogenförmigen Verlauf des Hebelarms entsprechend verändert.

In einer bevorzugten Ausführungsform der Erfindung wird eine berührungslose Abtasteinrichtung vorgeschlagen, die das Reinigungselement zusammen mit dem Spiegelreinigungselement entsprechend einem bestimmten vorgegebenen Abstand von den sich vorbeibewegenden Seitenteilen des Fahrzeugs quer zu dessen Förderrichtung verschiebt und dabei beim Passieren des Rückspiegels diesen umfährt. Diese berührungslose Abtasteinrichtung hat zweierlei Vorteile. Zum einen kann der Abstand der Reinigungselemente und der Spiegelreinigungselemente zum Fahrzeug optimal eingehalten werden, ohne daß beispielsweise Abstandsrollen benötigt werden, die unter Umständen zu einer Beschädigung der Karosserie der Seitenteile führen können. Zum anderen hat die berührungslose Abtasteinrichtung den Vorteil, daß der Abstand der Reinigungselemente zu den Seitenteilen des Fahrzeugs relativ gering gewählt werden kann, ohne daß die Gefahr besteht, daß der Rückspiegel im Verschiebeweg liegt, da dieser durch die Abtasteinrichtung umfahren wird. Dabei kehrt das Reinigungselement sowie das Spiegelreinigungselement nach Passieren des Rückspiegels wieder in den relativ geringen Abstand zum Fahrzeug zurück, so daß dann durch das Spiegelreinigungselement eine sehr effektive Reinigung des Spiegels möglich ist, da dann die Wirkungsrichtung des Spiegelreinigungselements einen sehr spitzen Winkel mit den Seitenteilen des Fahrzeugs einnehmen kann. In diesem Fall beaufschlagt das Spiegelreinigungselement nahezu senkrecht die Spiegelfläche des Rückspiegels, wodurch ein sehr guter Reinigungseffekt gewährleistet ist.

Die berührungslose Abtasteinrichtung arbeitet vorzugsweise optisch und ist gemäß einem weiteren Merkmal der Erfindung eine im wesentlichen parallel zum Reinigungselement verlaufende Lichtschranke mit Fotozellen. Die Fotozellen bestehen dabei aus einem Lichtsender sowie einem Lichtempfänger.

Vorzugsweise können zwei quer zur Förderrichtung des Fahrzeugs hintereinander angeordnete Lichtschranken mit entsprechenden Fotozellen vorgesehen sein, wobei die eine Lichtschranke die Kontur der Seitenteile des Fahrzeugs abtastet, während die andere Lichtschranke den Rückspiegel ertastet. Durch die Ertastung des Rückspiegels mit der zweiten Lichtschranke kann bei spielsweise die Beaufschlagung des Spiegelreinigungselements gesteuert werden.

In einer weiteren Ausführungsform der Erfindung wird vorgeschlagen, daß auf beiden Seiten der Waschstraße jeweils ein Reinigungselement mit Spiegelreinigungselement angeordnet ist, wobei nur auf der einen Seite eine Abtasteinrichtung zum Ertasten des Rückspiegels vorgesehen ist, während auf der anderen Seite das Spiegelreinigungselement entsprechend gesteuert wird. Diese Ausführungsform geht von dem Grundgedanken aus, daß auf beiden Seiten des Fahrzeugs jeweils ein Rückspiegel angeordnet ist, die jeweils gereinigt werden müssen. Aus diesem Grunde ist auf beiden Seiten der Waschstraße jedes der Reinigungselemente jeweils mit einem Spiegelreinigungselement versehen, wobei diese Reinigungselemente "auf gleicher Höhe" angeordnet sind, da auch die Seitenspiegel sowohl auf der Fahrer-als auch auf der Beifahrerseite symmetrisch zur Längsachse des Fahrzeugs angeordnet sind. In diesem Fall genügt es, daß die Abtasteinrichtung nur den Rückspiegel auf der Fahrerseite abtastet, wobei dann erfindungsgemäß der Rückspiegel auf der Beifahrerseite in jedem Fall entsprechend gesteuert wird und parallel mitläuft. Ist auf der Beifahrerseite ein Rückspiegel montiert, so wird dieser dann vorgereinigt. Ist kein Rückspiegel auf dieser Seite montiert, so strahlt das Spiegelreinigungselement ins Leere. Durch diese Art der Steuerung wird die Betätigung der Spiegelreinigungselemente konstruktiv vereinfacht, da nur eine Abtasteinrichtung zum Ertasten der Rückspiegel auf der Fahrerseite benötigt wird.

In einer Weiterbildung der Erfindung wird vorgeschlagen, daß die Querverschiebeeinrichtung für das Reinigungselement aus zwei in gleicher Höhe um in Förderrichtung des Fahrzeugs verlaufende Achse frei drehbar gelagerten Tragarmen besteht, daß die unteren Enden der Tragarme ebenfalls frei drehbar durch ein im wesentlichen horizontales Tragteil verbunden sind, daß am vorderen Ende des Tragteils das senkrechte Reinigungselement fest angeordnet ist und daß zwischen einem der Tragarme und dem Tragteil oder dem Reinigungselement eine Zylinder/Kolben-Einheit angeordnet ist. Durch diese parallelogrammartige und in Form einer Schaukel ausgebildete Querverschiebeeinrichtung ist auf einfache Weise eine Querverschiebung des Reinigungselements zusammen mit dem Spiegelreinigungselement möglich. Dabei ist diese Einrichtung schnell genug, um beispielsweise den Rückspiegel sicher umfahren zu können. Darüber hinaus ist gewährleistet, daß das Reinigungselement sowie das Spiegelreinigungselement ihre senkrechte Lage beibehalten.

Gemäß einem weiteren Merkmal der Erfindung wird vorgeschlagen, daß die gesamte Vorrichtung an einem Gestell um eine quer zur Förderrichtung des Fahrzeugs verlaufende Achse frei pendelnd aufgehängt ist. Sollte das Fahrzeug, bedingt durch eine technische Störung, gegen die Vorrichtung stoßen, so kann diese in Förderrichtung des Fahrzeugs aufgrund der Pendelaufhängung ausweichen, so daß größere Schäden vermieden werden. Über einen Schalter kann dann die Fördereinrichtung gestoppt werden, so daß das Fahrzeug stehen bleibt.

Das Spiegelreinigungselement ist vorzugsweise separat von dem Reinigungselement beaufschlagbar, wobei es nach Passieren des Rückspiegels für eine vorgegebene Zeit beaufschlagbar sein kann. Dies hat den Vorteil, daß das Spiegelreinigungselement nur dann betätigt wird, wenn auch eine Reinigung des Rückspiegels möglich ist, wenn also der Rückspiegel im Wirkungsbereich des Spiegelreinigungselements ist. Dies bringt eine Einsparung an Energie und Wasser mit sich.

Weitere Einzelheiten und Vorteile ergeben sich aus der nachfolgenden Beschreibung der zugehörigen Zeichnungen, in denen zwei bevorzugte Ausführungsformen einer erfindungsgemäßen Vorrichtung zum Reinigen des Rückspiegels von Fahrzeugen in einer Waschstraße schematisch dargestellt sind. In den Zeichnungen zeigen:

Fig. 1 eine Ansicht einer Reinigungsvorrichtung in Förderrichtung des Fahrzeugs durch die Waschstraße mit einem Sprühdüsenrohr sowie mit einem nachführbaren Sprühdüsenelement;

Fig. 2 eine Ansicht der Reinigungsvorrichtung in Fig. 1 quer zur Förderrichtung des Fahrzeugs mit nachgeführtem Sprühdüsenelement;

Fig. 3 eine Darstellung entsprechend Fig. 1 nach einer Querverschiebung der Reinigungselemente in Richtung des Fahrzeugs;

Fig. 4 die Funktionsweise der Reinigungsvorrichtung in verschiedenen Etappen (a bis e);

Fig. 5 eine andere Ausführungsform der Reinigungsvorrichtung mit einem Trockendüsenrohr und einem Trockendüsenelement für den Rückspiegel entsprechend der Darstellung in den Fig. 1 und 3;

Fig. 6 eine Darstellung der Reinigungsvorrichtung aus Fig. 5 entsprechend der Darstellung der Reinigungsvorrichtung in Fig. 2;

Fig. 7 die Einzelheit VII in Fig. 5 in vergrößerter Darstellung;

Fig. 8 einen Schnitt entlang der Linie VIII-VIII in Fig. 5;

Fig. 9 die Funktionsweise der Reinigungsvorrichtung in verschiedenen Etappen (a bis d).

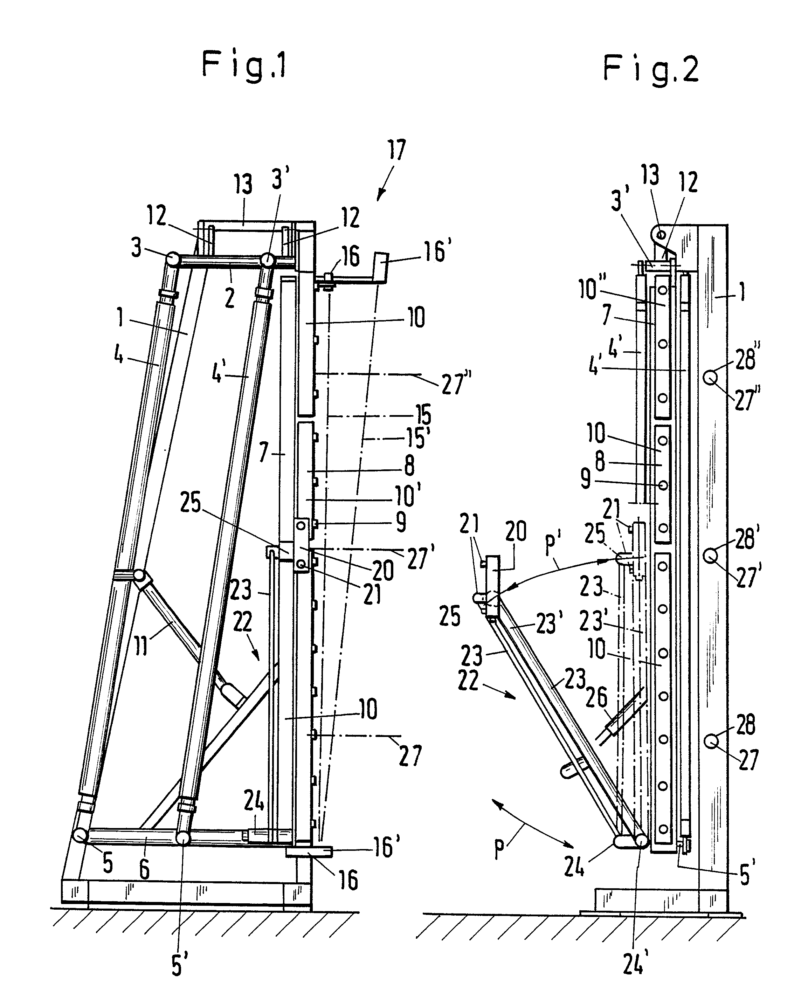

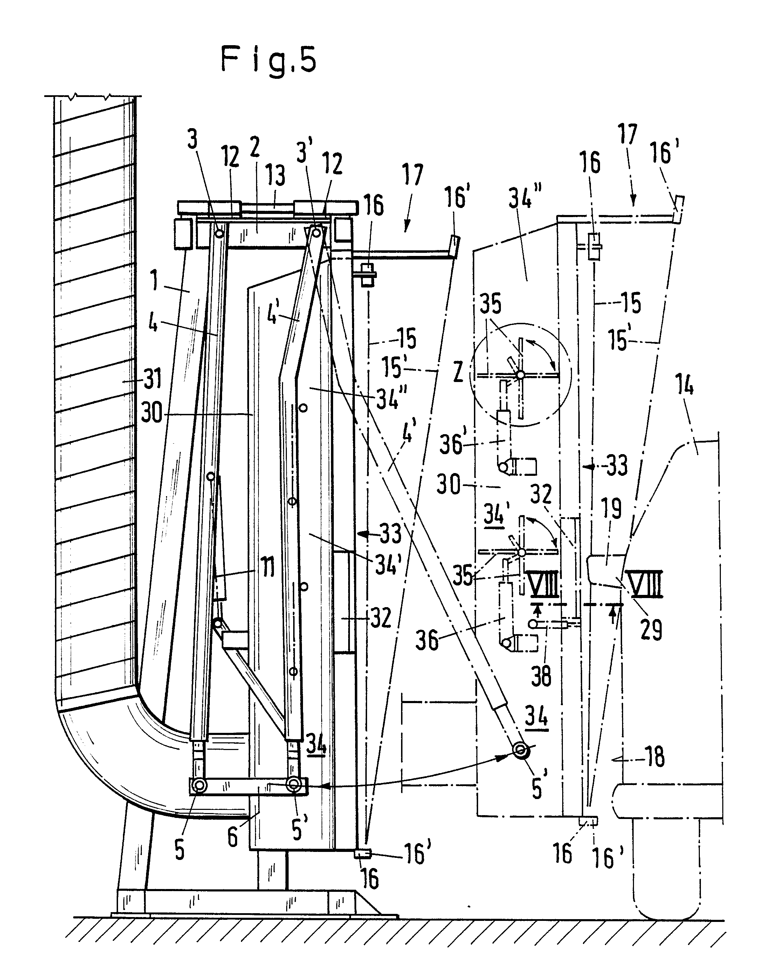

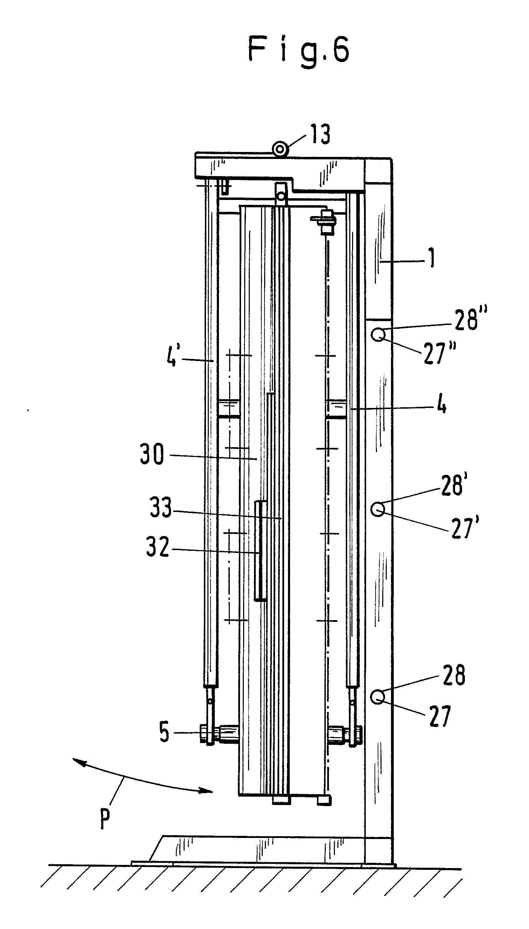

In den Fig. 1 bis 4 ist eine erste Ausführungsform einer Reinigungsvorrichtung dargestellt. Sie dient für den eigentlichen Waschvorgang mit Hochdruckwasser. Die in den Fig. 5 bis 9 dargestellte zweite Ausführungsform der Reinigungsvorrichtung dient dem Trocknungsvorgang und ist somit der Waschvorrichtung in den Fig. 1 bis 4 in der Waschstraße nachgeschaltet.

Die in den Fig. 1 bis 4 dargestellte Waschvorrichtung besteht aus einem Gestell 1, wobei jeweils ein Gestell 1 auf jeder Seite der Waschstraße angeordnet ist. Am oberen Ende des Gestells 1 weist dieses eine horizontale Querstrebe 2 auf. An dieser sind um Achsen 3, 3', die in Förderrichtung der Waschstraße liegen, frei drehbar zwei Tragarme 4, 4' gelagert. Die beiden unteren Enden der Tragarme 4, 4' sind ihrerseits ebenfalls um Achsen 5, 5' frei drehbar durch ein horizontales Tragteil 6 verbunden, wobei am vorderen Ende dieses Tragteils 6 ein Düsenrahmen 7 fest angeordnet ist. An diesem Düsenrahmen 7 ist ein Sprühdüsenrohr 8 senkrecht angeordnet. Dieses Sprühdüsenrohr 8 weist an seiner zur Waschstraße hin gerichteten Seite Düsen 9 auf, durch die das Wasser zum Reinigen hindurchtritt. In dem dargestellten Ausführungsbeispiel besteht das Sprühdüsenrohr 8 aus drei Einzelelementen 10, 10', 10″, die völlig separat voneinander sind und auch separat betrieben werden. Sie besitzen auch eigene Wasserzuführungen, die jedoch nicht dargestellt sind.

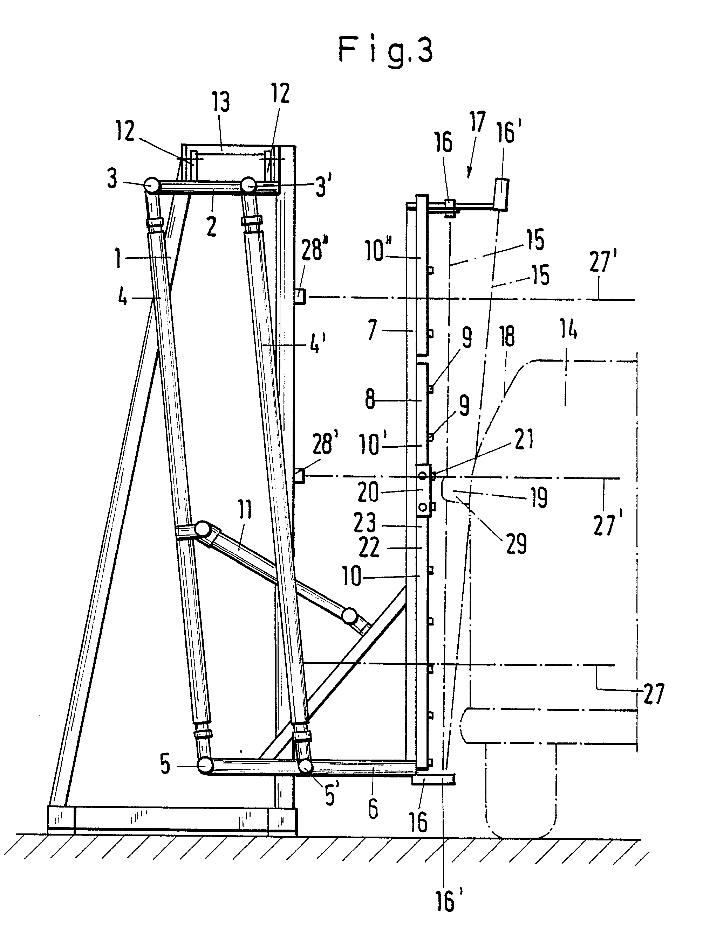

Die Querstrebe 2, die beiden Tragarme 4, 4' sowie das Tragteil 6 bilden ein verschwenkbares Parallelogramm, wobei die Schwenkbewegung quer zur Förderrichtung in der Waschstraße erfolgt, wie dies aus einem Vergleich in den Fig. 1 und 3 zu erkennen ist. Für die Querverschiebung dient eine Zylinder/Kolben-Einheit 11, die zwischen dem einen Tragarm 4 und dem Düsenrahmen 7 angeordnet ist. Durch Betätigen dieser Zylinder/Kolben-Einheit 11 erfolgt eine Querverschiebung aus der in Fig. 1 dargestellten Lage in die in Fig. 3 dargestellte Lage. Durch die Parallelogrammanordnung behält dabei das Sprühdüsenrohr 8 seine senkrechte Stellung.

Die obere Querstrebe 2 ist über Streben 12 an einer Achse 13 pendelnd aufgehängt, wobei die Achse 13 quer zur Förderrichtung in der Waschstraße verläuft, so daß die Pendelrichtung in Förderrichtung der Waschstraße liegt. Sollte ein Fahrzeug 14, bedingt durch eine technische Störung, gegen die Waschvorrichtung stoßen, so kann diese in Richtung des Pfeiles P wegschwenken, wie dies in Fig. 2 angedeutet ist. Über einen nicht dargestellten Schalter wird dann die Fördereinrichtung in der Waschstraße gestoppt und das Fahrzeug 14 bleibt stehen.

Für die Steuerung der Querverschiebeeinrichtung dienen zwei Lichtschranken 15, 15' mit Fotozellen 16, 16', die als Fotosender und Fotoempfänger ausgebildet sind. Diese Lichtschranken 15, 15' bilden eine Abtasteinrichtung 17 für die Seitenteile 18 und den Rückspiegel 19 des vorbeifahrenden Fahrzeuges 14. Die beiden Lichtschranken 15, 15' verlaufen im wesentlichen parallel zum Sprühdüsenrohr 8, wobei die beiden Lichtschranken 15, 15' einen spitzen Winkel miteinander einschließen. Die Lichtschranke 15' bestimmt den berührungslosen Abstand des Sprühdüsenrohres 8 zum Seitenteil 18 des Fahrzeugs 14, wobei nach Unterbrechen der Lichtschranke 15' die Zylinder/Kolben-Einheit 11 gestoppt wird und somit der Abstand zu den Seitenteilen 18 gehalten wird. Die Lichtschranke 15 ertastet den Rückspiegel 19, wie dies in Fig. 3 zu erkennen ist. Die genaue Funktionsweise wird weiter unten noch näher erläutert.

Die Waschvorrichtung besteht darüber hinaus aus einer speziellen Waschvorrichtung für den Rückspiegel 19 und weist ein Sprühdüsenelement 20 mit zwei Düsen 21 auf. Dieses Sprühdüsenelement ist am freien Ende eines Hebelarms 22 angeordnet. Dieser Hebelarm 22 besteht ebenfalls aus zwei Tragarmen 23, 23', die am unteren Ende des Sprühdüsenrohres 8 frei drehbar um Achsen 24, 24' angelenkt sind, wobei die Richtung der Achsen 24, 24' quer zur Förderrichtung der Fahrzeuge 14 in der Waschstraße verläuft, so daß die Tragarme 23, 23' in Förderrichtung verschwenkbar sind, wie dies durch den Pfeil P' angedeutet ist. Die vorderen freien Enden der Tragarme 23, 23' sind ebenfalls frei drehbar durch ein Tragteil 25 verbunden, an dem das Sprühdüsenelement 20 fest angeordnet ist. Auf diese Weise wird ein Parallelogramm gebildet, bei dem das Sprühdüsenelement 20 seine Wirkrichtung behält und immer in horizontaler Richtung abstrahlt. Die Betätigung des Hebelarms 22 erfolgt über eine Zylinder/Kolben-Einheit 26, die zwischen dem einen Tragarm 23 und dem Düsenrahmen 7 angeordnet ist.

Schließlich weist die Waschvorrichtung quer über die Förderstrecke in der Waschstraße verlaufende Lichtschranken 27, 27', 27″ mit Fotozellen 28, 28', 28″ auf, wobei die Lichtschranken 27, 27', 27″ in verschiedenen Höhen angeordnet sind. Die Lichtschranken 27, 27', 27″ verlaufen dabei von dem Gestell 1 auf der einen Seite der Waschstraße auf das Gestell auf der anderen Seite der Waschstraße, so daß sie voll in der Bewegungsrichtung der Fahrzeuge 14 liegen. Diese Lichtschranken 27, 27', 27″ dienen der Steuerung der Einzelelemente 10, 10', 10″ des Sprühdüsenrohrs 8.

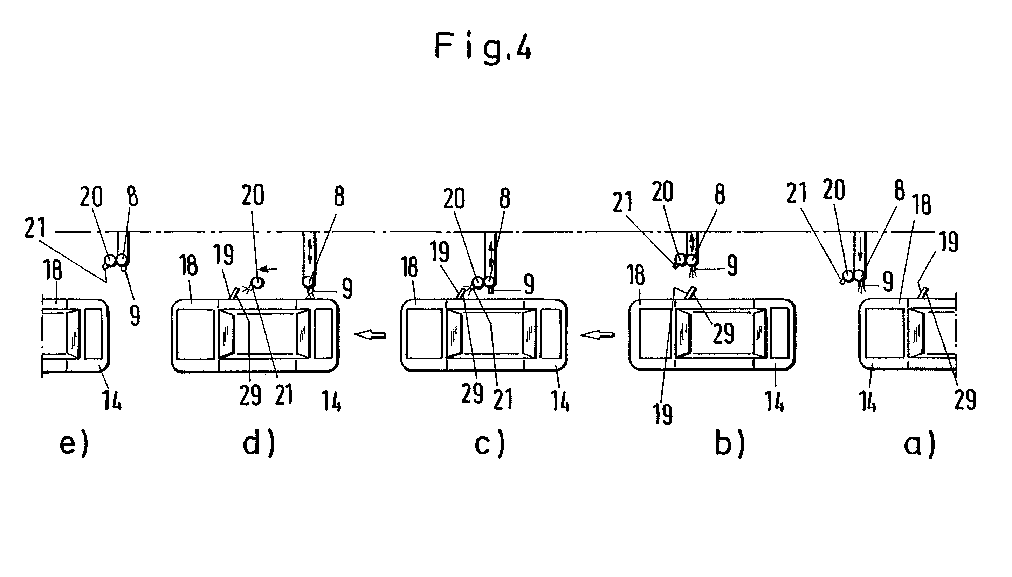

Die Funktionsweise der Waschvorrichtung ist wie folgt (vgl. Fig. 4):

In der Ausgangsstellung befindet sich die Vorrichtung in der zurückgezogenen Stellung (vgl. auch Fig. 4e). Das ankommende Fahrzeug 14 unterbricht die unterste Lichtschranke 27. Dies bewirkt zweierlei. Zum einen wird das Sprühdüsenrohr 8 durch die Zylinder/Kolben-Einheit 11 so lange quer zur Förderrichtung nach innen verschoben, bis die Seitenteile 18 des Fahrzeugs 14 die Lichtschranke 15' unterbrechen. Bei dieser Unterbrechung wird der Verschiebevorgang unterbrochen, so daß der Abstand des Sprühdüsenrohres 8 zum Fahrzeug 14 konstant bleibt. Zum anderen wird durch die Unterbrechung der Lichtschranke 27 das untere Einzelelement 10 des Sprühdüsenrohres 8 mit Wasser beaufschlagt und reinigt den vorderen Kotflügelbereich bis zum Heck des Fahrzeugs 14.

Im Bereich des Rückspiegels 19 passiert ebenfalls zweierlei. Zum einen unterbricht der Rückspiegel 19 die Lichtschranke 15, so daß mittels der Zylinder/Kolben-Einheit 11 das Sprühdüsenrohr 8 kurz zurückgezogen wird (Fig. 4b) und den Rückspiegel 19 umläuft, wobei das Sprühdüsenrohr 8 hinter dem Rückspiegel 19 wieder ans Fahrzeug 14 zurückgeführt wird (vgl. Fig. 4c). Gleichzeitig wird durch die Unterbrechung der Lichtschranke 15 die Zylinder/Kolben-Einheit 26 aktiviert, so daß der Hebelarm 22 in Förderrichtung des Fahrzeugs 14 geschwenkt wird und dem Rückspiegel 19 nachläuft (vgl. Fig. 4d). Gleichzeitig wird die Wasserzufuhr zum Sprühdüsenelement 20 geöffnet und die Spiegelfläche 29 des Rückspiegels 19 mit dem Hochdruckwasser beaufschlagt. Das Sprühdüsenelement 20 läuft dabei ca. 70 cm dem Rückspiegel 19 nach und durchläuft dabei einen Kreisbogen, so daß die Höhendifferenz zu den verschiedenen Fahrzeugen 14 und somit die verschiedenen Höhen der Rückspiegel 19 ausgeglichen wird. Durch das mitlaufende Sprühdüsenelement 20 werden die toten Ecken hinter dem Rückspiegel, die sonst nicht erreicht werden, sehr gut gereinigt.

Darüber hinaus wird durch die Windschutzscheibe des Fahrzeugs 14 die Lichtschranke 27′ untebrochen, was die Beaufschlagung des mittleren Einzelelements 10′ des Sprühdüsenrohres 8 auslöst. Sollte das Fahrzeug 14 noch die oberste Lichtschranke 27″ unterbrechen, würde auch das oberste Einzelelement 10″ des Sprühdüsenrohres 8 mit Wasser beaufschlagt.

Nachdem der Hebelarm 22 mit dem Sprühdüsenelement 20 die Endstellung erreicht hat, schwenkt er wieder in seine Ausgangsstellung zurück und die Wasserzufuhr wird unterbrochen. Wenn das Heck des Fahrzeugs 14 die unterste Lichtschranke 27 passiert hat, kehrt das Sprühdüsenrohr 8 in seine Ausgangsstellung zurück (vgl. Fig. 4e).

Durch die Unterteilung des Sprühdüsenrohres 8 in die drei Einzelelemente 10, 10′, 10″ wird das Wasser nur dort eingeschaltet, wo es auch benötigt wird. Dies bringt eine Einsparung an Wasser und Energie mit sich, was insbesondere dann von Vorteil ist, wenn der Waschvorgang mit heißem Wasser erfolgt.

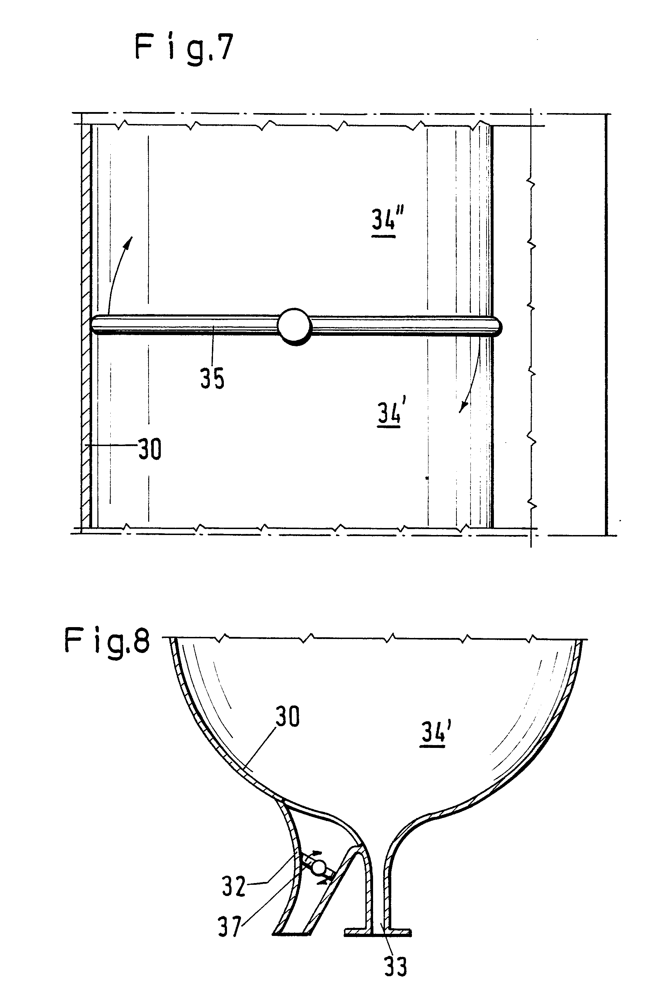

In den Fig. 5 bis 9 ist eine entsprechende Trockenvorrichtung dargestellt mit einer entsprechenden Querverschiebeeinrichtung. Statt des Sprühdüsenrohres 8 ist jedoch ein Trockendüsenrohr 30 vorgesehen, das über einen Schlauch 31 mit einem nicht dargestellten Gebläse verbunden ist. Im mittleren Bereich des Trockendüsenrohres 30 ist ein Trockendüsenelement 32 angeordnet, das in Förderrichtung des Fahrzeugs 14 gerichtet ist, wie in Fig. 8 zu erkennen ist, während die Düse 33 des Trockendüsenrohres 30 senkrecht zur Förderrichtung des Fahrzeugs 14 verläuft. Im Gegensatz zum Sprühdüsenelement 20 ist jedoch das Trockendüsenelement 32 fest am Trockendüsenrohr 30 ohne eine Nachlaufeinrichtung angeordnet.

Das Trockendüsenrohr 30 ist in insgesamt drei Kammern 34, 34′, 34″ unterteilt. Als Trenneinrichtung dienen zwei Drosselklappen 35, 35′, die mittels Zylinder/Kolben-Einheiten 36, 36′ betätigt werden. Fur die Betätigung des Trockendüsenelements 32 dient eine separate Drosselklappe 37 mit einer entsprechenden Zylinder/Kolben-Einheit 38.

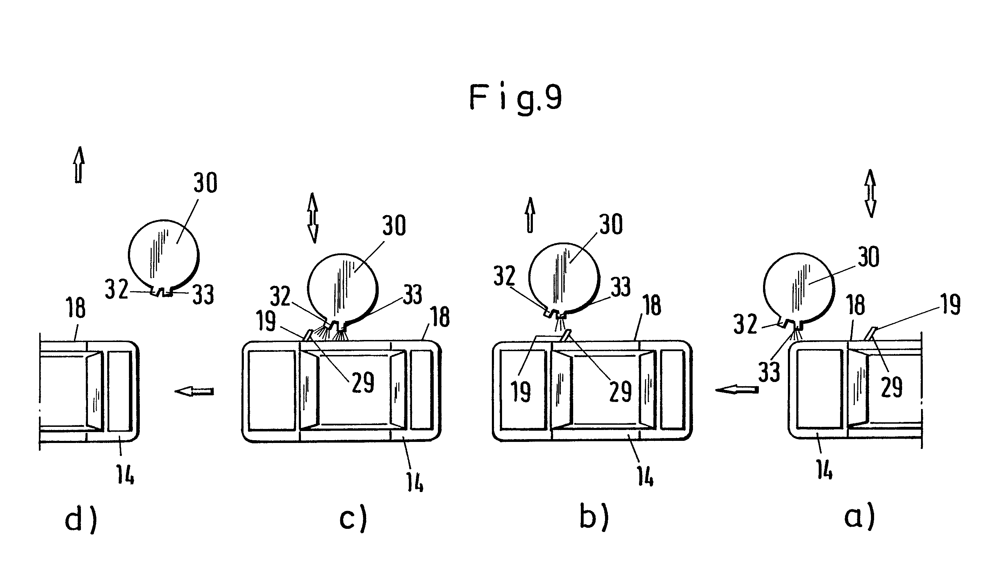

Die Funktionsweise dieser Trockenvorrichtung ist wie folgt (vgl. Fig. 9a bis d): Das Fahrzeug 14 unterbricht die Lichtschranke 27, worauf die Zylinder/Kolben-Einheit 11 das Trockendüsenrohr 30 in Richtung auf das Fahrzeug 14 verschiebt (Fig. 9a). Der Verschiebevorgang wird nach Unterbrechung der Lichtschranke 15′ unterbrochen, so daß das Trockendüsenrohr 30 einen konstanten Abstand zum Seitenteil 18 des Fahrzeugs 14 hält. Gleichzeitig wird auch das Gebläse aktiviert, so daß Luft in die unterste Kammer 34 des Trockendüsenrohres 30 strömt und durch die Düse 33 austritt. Im Bereich des Rückspiegels 19 wird die Lichtschranke 15 unterbrochen, so daß das Trockendüsenrohr 30 zurückgezogen wird und den Rückspiegel 19 umfährt (Fig. 9b und c). Gleichzeitig wird die Drosselklappe 37 mittels der Zylinder/Kolben-Einheit 38 des Trockendüsenelements 32 für eine bestimmte Zeitdauer geöffnet, so daß eine Trocknung des Rückspiegels 19 insbesondere an unzugänglichen Stellen gewährleistet ist.

Durch die Windschutzscheibe des Fahrzeugs 14 wird die mittlere Lichtschranke 27′ unterbrochen, so daß die Drosselklappe 35 mittels der Zylinder/Kolben-Einheit 36 geöffnet wird. Die Luft strömt dabei von unten aus der ersten Kammer 34 zusätzlich noch in die zweite Kammer 34′, so daß auch der Bereich der Seitenscheiben des Fahrzeugs 14 getrocknet wird. Durchbricht ein höheres Fahrzeug 14 noch die oberste Lichtschranke 27″, so wird durch die Zylinder/Kolben-Einheit 36 auch die obere Drosselklappe 35′ geöffnet, so daß auch die oberste Kammer 34″ mit Luft beaufschlagt wird, die durch die Düse 33 hindurchtritt.

Hat das Fahrzeug 14 die unterste Lichtschranke 27 wieder passiert, so geht das Trockendüsenrohr 30 in seine Ausgangsstellung zurück (Fig. 9d).

Diese Trockenvorrichtung hat mehrere Vorteile. Zunächst kann der Abstand des Trockendüsenrohres 30 zum Fahrzeug 14 optimal eingehalten werden, ohne daß Abstandsrollen benötigt werden. Durch die Lichtschranken 15, 15′ kann der

Rückspiegel 19 des Fahrzeugs 14 umfahren werden. Weiterhin wird durch das in Förderrichtung des Fahrzeugs 14 gerichtete Trockendüsenelement 32 der Rückspiegel 19 besser getrocknet. Schließlich wird durch das in die drei Kammern 34, 34', 34" unterteilte Trockendüsenrohr 30 der Luftstrom nur dorthin geleitet, wo er auch benötigt wird. So wird beispielsweise zum Trocknen des unteren Teiles des Fahrzeugs 14 nur die unterste Kammer 34 benötigt. Dies bringt eine große Energieeinsparung mit sich.

## Bezugszeichenliste

1 Gestell
2 Querstrebe
3 Achse
3' Achse
4 Tragarm
4' Tragarm
5 Achse
5' Achse
6 Tragteil
7 Düsenrahmen
8 Sprühdüsenrohr
9 Düse
10 Einzelelement
10' Einzelelement
10" Einzelelement
11 Zylinder/Kolben-Einheit
12 Strebe
13 Achse
14 Fahrzeug
15 Lichtschranke
15' Lichtschranke
16 Fotozelle
16' Fotozelle
17 Abtasteinrichtung
18 Seitenteil
19 Rückspiegel
20 Sprühdüsenelement
21 Düse
22 Hebelarm
23 Tragarm
23' Tragarm
24 Achse
24' Achse
25 Tragteil
26 Zylinder/Kolben-Einheit
27 Lichtschranke
27' Lichtschranke
27" Lichtschranke
28 Fotozelle
28' Fotozelle
28" Fotozelle
29 Spiegelfläche
30 Trockendüsenrohr

31 Schlauch
32 Trockendüsenelement
33 Düse
34 Kammer
34' Kammer
34" Kammer
35 Drosselklappe
35' Drosselklappe
36 Zylinder/Kolben-Einheit
36' Zylinder/Kolben-Einheit
37 Drosselklappe
38 Zylinder/Kolben-Einheit
P Pfeil
P' Pfeil

## Ansprüche

1. Vorrichtung zum Reinigen des Rückspiegels (19) eines Fahrzeugs (14) in einer Waschstraße mit einem sich in senkrechter Richtung erstreckenden seitlichen Reinigungselement (Sprühdüsenrohr (8) oder Trockendüsenrohr (30)), entlang dem die Seitenteile (18) des Fahrzeugs (14) zusammen mit dem Rückspiegel (19) vorbeigeführt werden, **gekennzeichnet durch** ein am Reinigungselement (8, 30) angeordnetes und in Förderrichtung des Fahrzeugs (14) gerichtetes Spiegelreinigungselement (Sprühdüsenelement (20) oder Trockendüsenelement (32)).

2. Vorrichtung nach Anspruch 1, dadurch gekennzeichnet, daß das Spiegelreinigungselement (20, 32) in Förderrichtung des Fahrzeugs (14) - schräg auf dessen Seitenteile (18) in den Winkelbereich zwischen diesen Seitenteile (18) und dem Rückspiegel (19) gerichtet ist.

3. Vorrichtung nach Anspruch 1 oder 2, dadurch gekennzeichnet, daß das Spiegelreinigungselement (20, 32) fest am Reinigungselement (8, 30) angeordnet ist.

4. Vorrichtung nach Anspruch 1 oder 2, dadurch gekennzeichnet, daß das Spiegelreinigungselement (20, 32) bezüglich zum Rückspiegel (19) in Förderrichtung des Fahrzeugs (14) nachführbar ist.

5. Vorrichtung nach Anspruch 4, dadurch gekennzeichnet, daß das Spiegelreinigungselement (20, 32) am freien Ende eines Hebelarmes (22) angeordnet ist, der mit seinem anderen Ende entweder am oberen oder am unteren Ende des Reinigungselements (8, 30) um eine quer zur Förderrichtung des Fahrzeugs (14) verlaufende Achse (24, 24') verschwenkbar ist, wobei zwischen dem Hebelarm (22) und dem Reinigungselement (8, 30) eine Zylinder/Kolben-Einheit (26) angeordnet ist.

6. Vorrichtung nach Anspruch 5, dadurch gekennzeichnet, daß der Hebelarm (22) zum Nachführen des Spiegelreinigungselements (20, 32) aus zwei um feste Punkte frei drehbar gelagerten Tragarmen (23, 23') besteht, daß zwischen den freien Enden der Tragarme (23, 23') ebenfalls frei drehbar ein Tragteil (25) angeordnet ist und daß an dem Tragteil (25) das Spiegelreinigungselement (20, 32) angebracht ist.

7. Vorrichtung nach einem der Ansprüche 1 bis 6, gekennzeichnet durch eine berührungslose Abtasteinrichtung (17), die das Reinigungselement (8, 30) zusammen mit dem Spiegelreinigungselement (20, 32) entsprechend einem bestimmten vorgegebenen Abstand von den sich vorbeibewegenden Seitenteilen (18) des Fahrzeugs (14) quer zu dessen Förderrichtung verschiebt und dabei beim Passieren des Rückspiegels (19) diesen umfährt.

8. Vorrichtung nach Anspruch 7, dadurch gekennzeichnet, daß die berührungslose Abtasteinrichtung (17) eine im wesentlichen parallel zum Reinigungselement (8, 30) verlaufende Lichtschranke (15, 15') mit Fotozellen (16, 16) ist.

9. Vorrichtung nach Anspruch 8, dadurch gekennzeichnet, daß zwei quer zur Förderrichtung des Fahrzeugs (14) hintereinander angeordnete Lichtschranken (15, 15') mit entsprechenden Fotozellen (16, 16') vorgesehen sind, wobei die eine Lichtschranke (15') die Kontur der Seitenteile (18) des Fahrzeugs (14) abtastet, während die andere Lichtschranke (15) den Rückspiegel (19) ertastet.

10. Vorrichtung nach einem der Ansprüche 7 bis 9, dadurch gekennzeichnet, daß auf beiden Seiten der Waschstraße jeweils ein Reinigungselement (8, 30) mit Spiegelreinigungselement (20, 32) angeordnet ist, wobei nur auf der einen Seite eine Abtasteinrichtung (17) zum Ertasten des Rückspiegels (19) vorgesehen ist, während auf der anderen Seite das Spiegelreinigungselement (20, 32) entsprechend gesteuert wird.

11. Vorrichtung nach einem der Ansprüche 7 bis 10, dadurch gekennzeichnet, daß die Querverschiebeeinrichtung für das Reinigungselement (8, 30) aus zwei in gleicher Höhe um in Förderrichtung des Fahrzeugs (14) verlaufende Achsen (5, 5') frei drehbar gelagerten Tragarmen (4, 4') besteht, daß die unteren Enden der Tragarme (4, 4') ebenfalls frei drehbar durch ein im wesentlichen horizontales Tragteil (6) verbunden sind, daß am vorderen Ende des Tragteils (6) das senkrechte Reinigungselement (8, 30) fest angeordnet ist und daß zwischen einem der Tragarme (4) und dem Tragteil (6) oder dem Reinigungselement (8, 30) eine Zylinder/Kolben-Einheit (11) angeordnet ist.

12. Vorrichtung nach einem der Ansprüche 1 bis 11, dadurch gekennzeichnet, daß diese an einem Gestell (1) um eine quer zur Förderrichtung des Fahrzeugs (14) verlaufende Achse (13) frei pendelnd aufgehängt ist.

13. Vorrichtung nach einem der Ansprüche 1 bis 12, dadurch gekennzeichnet, daß das Spiegelreinigungselement (20, 32) separat von dem Reinigungselement (8, 30) beaufschlagbar ist.

14. Vorrichtung nach Anspruch 12, dadurch gekennzeichnet, daß das Spiegelreinigungselement (20, 32) nach Passieren des Rückspiegels (19) für eine vorgegebene Zeit beaufschlagbar ist.

Fig.1

Fig.2

# Fig.3

# Fig.4

e)          d)          c)          b)          a)

0 262 417

Fig.5

# Fig.6

## Fig.7

$\underline{34''}$

$\underline{34'}$

35

30

## Fig.8

30

$\underline{34'}$

32
37

33

# Fig.9

d)        c)        b)        a)

0 262 417